(19) Europäisches Patentamt
European Patent Office
Office européen des brevets

(11) Publication number: **0 472 145 A1**

## (12) EUROPEAN PATENT APPLICATION

(21) Application number: **91113873.3**

(22) Date of filing: **19.08.91**

(51) Int. Cl.5: **G11B 5/712**, H01F 1/06, G11B 5/706

(30) Priority: **20.08.90 JP 217228/90**
**19.09.90 JP 247333/90**
**08.11.90 JP 301174/90**
**29.03.91 JP 91550/91**

(43) Date of publication of application:
**26.02.92 Bulletin 92/09**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Masafumi, Ata**
**c/o Sony Corporation 7-35 Kitashinagawa**
**6-chome**
**Shinagawa-ku Tokyo(JP)**
Inventor: **Masataka, Machida**
**c/o Sony Corporation 7-35 Kitashinagawa**
**6-chome**
**Shinagawa-ku Tokyo(JP)**
Inventor: **Haruo, Watanabe**
**c/o Sony Corporation 7-35 Kitashinagawa**
**6-chome**
**Shinagawa-ku Tokyo(JP)**
Inventor: **Ohte, Eiji**
**c/o Sony Magn.Prod.Inc 5-6 Kitashinagawa**
**6-chome**
**Shinagawa-ku Tokyo(JP)**
Inventor: **Kazuhiro, Okamoto**
**c/o Sony Magn.Prod.Inc 5-6 Kitashinagawa**
**6-chome**
**Shinagawa-ku Tokyo(JP)**

(74) Representative: **TER MEER - MÜLLER - STEINMEISTER & PARTNER**
**Mauerkircherstrasse 45**
**W-8000 München 80(DE)**

# (54) Ferromagnetic metal particles and magnetic recording medium containing them.

(57) Disclosed herein is the surface treatment of ferromagnetic metal particles for magnetic recording media with an alicyclic dicarboxylic acid and/or anhydride thereof or with naphthalenedicarboxylic acid and/or anhydride thereof. The surface treatment is intended for the improvement of oxidation resistance and corrosion resistance. The surface-treated ferromagnetic metal particles are used to make a magnetic recording medium which retains its magnetic properties for a long period of time.

EP 0 472 145 A1

The present invention relates to ferromagnetic metal particles for magnetic recording media and a magnetic recording medium based thereon.

There is a demand for higher recording density in the field of magnetic recording, especially VTR (video tape recording), where a high image quality is required. The high recording density needs iron or an iron-based metal material in place of iron oxide which has been used as a magnetic powder for conventional recording media. Particles of iron or iron-based ferromagnetic metal are produced by reducing with hydrogen iron oxide or iron oxyhydroxide, containing or not containing a metal (other than iron) such as Co, Ni, Cr, Mn, Cu, Zn, Ti, and V. Such ferromagnetic metal particles are superior in magnetic properties to conventional iron oxide-based ferromagnetic powder.

The above-mentioned ferromagnetic metal particles have a disadvantage that they are liable to ignition because they become easily oxidized in air owing to their high surface activity. This tendency becomes stronger as the magnetic powder is made finer to lower the noise of the magnetic recording medium. Therefore, such ferromagnetic metal particles become deteriorated with time in magnetic properties such as saturation magnetization. In other words, they are poor in storage stability. This deterioration is due to oxidation which is accelerated by a certain kind of gas and moisture while they are stored or mixed with a resin and organic solvent for coating, or after they have been coated onto a substrate such as polyester film.

A means to address this problem is the stabilization of the surface of magnetic metal particles, which is achieved by passivation, that is, the formation of oxide film on the surface of particles in the liquid phase or gas phase. Another means is the covering of the surface of ferromagnetic metal particles with a certain kind of metal or an organic material such as surface active agent and resin. These means, however, are not satisfactory to the improvement of oxidation resistance. In addition, the surface treatment itself could deteriorate the magnetic properties and dispersibility.

It is an object of the present invention to provide a magnetic recording medium superior in storage stability. This object is achieved by improving the ferromagnetic metal particles in oxidation resistance and corrosion resistance. In other words, the surface of ferromagnetic particles is treated with an alicyclic dibasic carboxylic acid and/or anhydride thereof or with a naphthalenedicarboxylic acid and/or anhydride thereof.

It is another object of the present invention to provide a magnetic recording medium consisting of a non-magnetic substrate and a magnetic layer composed mainly of a magnetic powder and binder, in which the magnetic powder is the ferromagnetic metal powder treated as mentioned above.

Thus, the present invention was proposed in view of the above-foregoing. It is an object of the present invention to improve the oxidation resistance and corrosion resistance of ferromagnetic metal particles to be used as a magnetic power, and to provide a magnetic recording medium which is superior in stability with time.

In order to achieve the above-mentioned object, the present inventors carried out extensive studies which led to the finding that it is possible to prevent the oxidation of ferromagnetic metal particles if the surface of ferromagnetic metal particles is made to adsorb an alicyclic dicarboxylic acid and/or an anhydride thereof. This finding is the basis of the first aspect of the present invention.

The first aspect of the present invention resides in the ferromagnetic metal fine particles for magnetic recording media which are surface-treated with an alicyclic dibasic carboxylic acid and/or anhydride thereof. The first aspect of the present invention also resides in a magnetic recording medium consisting of a non-magnetic substrate and a magnetic layer composed mainly of a magnetic powder and binder, in which the magnetic powder is one which is surface-treated with an alicyclic dibasic carboxylic acid and/or anhydride thereof.

The second aspect of the present invention resides in ferromagnetic metal particles the surface of which is chemically modified with naphthalenedicarboxylic acid and/or anhydride thereof, so that they are protected from oxidation.

In other words, the ferromagnetic metal particles for magnetic recording media pertaining to the present invention are formed by the surface-treatment of fine particles of ferromagnetic metal or alloy with 2,3-naphthalenedicarboxylic acid and/or anhydride thereof.

Moreover, the ferromagnetic metal particles for magnetic recording media pertaining to the present invention are formed by the surface-treatment of fine particles of ferromagnetic metal or alloy with 1,8-naphthalenedicarboxylic acid and/or anhydride thereof.

The magnetic recording medium of the present invention consists of a non-magnetic substrate and a magnetic layer composed mainly of a magnetic powder and binder, in which the magnetic powder is one which is surface-treated with an naphthalenedicarboxylic acid and/or anhydride thereof.

According to the present invention, the ferromagnetic metal particles for recording media are made

from ferromagnetic metals such as Fe, Co, and Ni, or from Fe-, Co-, or Ni-based ferromagnetic alloys such as Fe-Co, Fe-Ni, Fe-Co-Ni, Co-Ni, Fe-Mn-Zn, Fe-Ni-Zn, Fe-Co-Ni-Cr, Fe-Co-Ni-P, Fe-Co-B, Fe-Co-Cr-B, and Fe-C-V. They may contain optional elements including Al, Si, Ti, Cr, Mn, Cu, Zn, Mg, and P for the improvement of their properties. These ferromagnetic metal particles may have any specific surface area; but they should preferably have a specific surface area greater than 25 $m^2/g$, especially greater than 30 $m^2/m$.

According to the first aspect of the present invention, the ferromagnetic metal particles are surface-treated with an alicyclic dicarboxylic acid or anhydride thereof. These compounds may be used alone or in combination with other compounds.

The above-mentioned alicyclic dicarboxylic acid and anhydride thereof may have any number of carbon atoms constituting the cyclic skeleton. The carbon number usually ranges from 4 to 10. Those compounds having a carbon number of 6 for the cyclic skeleton are most desirable. The dicarboxylic acid should preferably have the two carboxyl groups which are adjacent to each other. Examples of the alicyclic dicarboxylic acid and anhydride thereof include cis-1,2-cyclohexanedicarboxylic acid and anhydride thereof, trans-1,2-cyclohexanedicarboxylic acid and anhydride thereof, cis-1,3-cyclohexanedicarboxylic acid and anhydride thereof, trans-1,3-cyclohexanedicarboxylic acid and anhydride thereof, cis-1,4-cyclohexanedicarboxylic acid and anhydride thereof, and trans-1,4-cyclohexanedicarboxylic acid and anhydride thereof. 1,2-cyclohexanedicarboxylic acid, 1,3-cyclohexanedicarboxylic acid, and 1,4-cyclohexanedicarboxylic acid have their respective structures represented by the formulas (1) to (3) below.

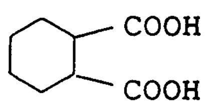 (1)

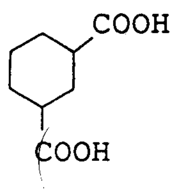 (2)

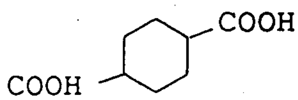 (3)

They take the cis-form or trans-form depending on the configuration of the carboxyl groups.

According to the second aspect of the present invention, the above-mentioned ferromagnetic metal particles are surface-treated with naphthalenedicarboxylic acid and/or anhydride thereof. Examples of the naphthalenedicarboxylic acid include 1,2-naphthalenedicarboxylic acid as well as 1,3-, 1,4-, 1,5-, 1,6-, 1,7-, 1,8-, 2,3-, 2,6-, and 2,7-naphthalenedicarboxylic acid, and anhydrides of 1,2-, 1,8-, and 2,3-naphthalenedicarboxylic acid. Incidentally, the positions of the carboxylic acids attaching to the naphthalene skeleton are numbered as shown below.

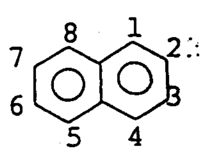

It is desirable to carry out the surface treatment with 2,3-naphthalenedicarboxylic acid or anhydride thereof or 1,8-naphthalenedicarboxylic acid or anhydride thereof, or a combination thereof.

These compounds are represented by the formulas (1) to (4) below. All of them have the structure of orthoaromatic dicarboxylic acid.

(1) 2,3-naphthalenedicarboxylic acid

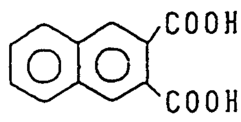

(2) 2,3-naphthalenedicarboxylic anhydride

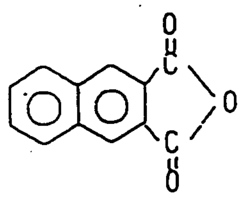

(3) 1,8-naphthalenedicarboxylic acid

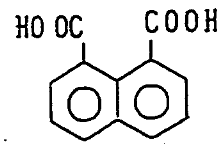

(4) 1,8-naphthalenedicarboxylic anhydride

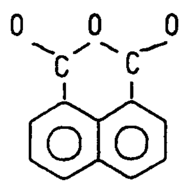

The above-mentioned compounds have not only an optimum acidity but also a specific stereostructure which is suitable for the distance between iron atoms and the valence of iron atoms in their reaction with the basic hydroxyl group (connected to the six-coordinate iron) present on the oxide surface of the ferromagnetic metal particles. Moreover, they have the aromatic ring which takes the optimum packing when the acid group completely reacts with the basic hydroxyl group on the surface of the ferromagnetic metal particles. For this reason, they exhibit a very good anticorrosion performance.

According to the first and second aspect of the present invention, the surface treatment of the ferromagnetic metal particles with the above-mentioned compound is accomplished by dipping in a solution of the compound in an organic solvent. Examples of the solvent include water, ethanol and other alcoholic solvents, acetone and other ketone solvents, and toluene and other aromatic solvents.

The coating weight of the alicyclic dicarboxylic acid on the ferromagnetic metal particles should be 0.03-30 parts by weight, preferably 0.1-10 parts by weight, for 100 parts by weight of the particles. Coating with an excess amount does not produce any additional effect; but it is wasted. An excess coating might has an adverse effect on the physical properties of the magnetic coating layer of the magnetic recording medium. A coating weight less than 0.03 part by weight is too small to produce a sufficient effect for storage stability.

According to the present invention, the above-mentioned ferromagnetic metal particles are mixed with a resin binder, an organic solvent, and a variety of additives to make a magnetic paint. This magnetic paint is applied to a non-magnetic substrate to make a magnetic recording medium. There are no specific restriction on the kind of the resin binder, organic solvent, and additives. The mixing ratio of these components may be set up as in the case of ordinary magnetic recording media.

Function of the invention:

In the case of surface treatment of ferromagnetic metal particles with 2,2'-dipyridyl or 9,10-phenanthroline (which is a typical compound to form a complex with metal), these compounds are adsorbed in large quantities on the surface of ferromagnetic metal particles, whereas the treated ferromagnetic metal particles do not greatly vary in the retention of saturation magnetization from untreated ones. Moreover the treatment with these compounds do not produce the antioxidation and anticorrosion effect at all. By contrast, it was found that water is formed by treatment with the alicyclic dicarboxylic acid and/or anhydride thereof or naphthalenedicarboxylic acid and/or anhydride thereof which are used according to the first and second aspect of the present invention. This indicates that a dehydrating adsorption reaction takes place between the treating agent and the surface of ferromagnetic metal particles and that a direct bonding takes place between oxygen in the treating agent and iron on the surface of ferromagnetic metal particles. It is considered, therefore, that in the case of surface treatment with the alicyclic dicarboxylic acid and/or anhydride thereof or naphthalenedicarboxylic acid and/or anhydride thereof, the effect of antioxidation and anticorrosion is not due to the water-repellency produced by surface treatment but is due to a highly ionic bond between the treating agent (as an organic acid) and Fe-OH present on the surface of ferromagnetic metal particles. The bonding potential affects the internal structure and contributes to the improvement of antioxidation and anticorrosion.

In other words, the surface treatment of ferromagnetic metal particles with the alicyclic dicarboxylic acid and/or anhydride thereof or naphthalenedicarboxylic acid and/or anhydride thereof brings about the dehydration reaction between the treating agent and the surface of ferromagnetic metal particles. This dehydration reaction forms a coating film, which protects the surface of ferromagnetic metal particles from oxidation which otherwise would occur while the ferromagnetic metal particles are stored or prepared into a coating paint or the finished magnetic recording medium is stored.

According to the present invention, it is possible to improve the oxidation resistance of ferromagnetic metal particles, as mentioned above. By using the ferromagnetic metal particles as a magnetic powder, it is possible to produce a magnetic recording medium which is superior in storage stability and resistant to change with time in magnetic properties (such as saturation magnetization).

## EXAMPLES

The invention will be described with reference to the following examples which are not intended to restrict the scope of the invention.

(1) Examples of the first aspect of the invention in which the surface treatment of ferromagnetic metal particles was carried out with an alicyclic dicarboxylic acid and/or anhydride thereof.

### Example 1

This example is for the surface-treatment of ferromagnetic metal particles with cis-1,2-cyclohexanedicarboxylic acid.

First, cis-1,2-cyclohexanedicarboxylic acid was dissolved in ethanol to give a 2.5 x $10^{-3}$mol/l solution. In 50 ml of this ethanol solution was placed 2.5 g of ferromagnetic metal fine particles, followed by standing for about 8 hours. The ferromagnetic metal particles were filtered out and washed with ethanol several times to remove the physically adsorbed compound. The treated ferromagnetic metal particles were vacuum-dried at about 30 °C for 8 hours. Thus there was obtained a treated powder.

### Comparative Example 1

The same procedure as in Example 1 was repeated to produce a treated powder except that the cis-1,2-cyclohexanedicarboxylic acid was replaced by succinic acid.

### Comparative Example 2

The same procedure as in Example 1 was repeated to produce a treated powder except that the cis-1,2-cyclohexanedicarboxylic acid was replaced by maleic acid.

### Comparative Example 3

The same procedure as in Example 1 was repeated to produce a treated powder except that the cis-1,2-cyclohexanedicarboxylic acid was replaced by malonic acid.

Comparative Example 4

The same procedure as in Example 1 was repeated to produce a treated powder except that the cis-1,2-cyclohexanedicarboxylic acid was replaced by 1,2,3-propanetricarboxylic acid.

The treated powders obtained in Example 1 and Comparative Examples 1 to 4 were tested for change with time in magnetic properties. The results are shown in Table 1. The coercive force $H_c$ and saturation magnetisation $\sigma_S$ of the treated powders were measured immediately after their drying. The coercive force $H_c$ and saturation magnetization $\sigma_S$ of the treated powders were also measured after they had been conditioned for 2 weeks in a constant-temperature constant-humidity bath at 60°C and 90 %RH. In Comparative Example 5, ferromagnetic metal particles without treatment were tested in the same manner as mentioned above.

Table 1

| Treating agent | Immediately after drying | | After conditioning for 2 weeks | | Retention (%) |
|---|---|---|---|---|---|
| | $H_c$ (Oe) | $\sigma_s$ (emu/g) | $H_c$ (Oe) | $\sigma_s$ (emu/g) | |
| Example 1 | 1475 | 120.77 | 1472 | 111.93 | 92.68 |
| Comparative Example 1 | 1475 | 122.89 | 1471 | 106.25 | 86.47 |
| Comparative Example 2 | 1475 | 122.07 | 1467 | 99.51 | 81.54 |
| Comparative Example 3 | 1475 | 123.46 | 1454 | 102.62 | 83.05 |
| Comparative Example 4 | 1474 | 120.14 | 1458 | 103.92 | 86.50 |
| Comparative Example 5 | 1473 | 124.07 | 1432 | 97.01 | 78.19 |

It is noted from Table 1 that the ferromagnetic metal particles in Example 1 are much smaller in change with time in coercive force $H_c$ and saturation magnetization $\sigma_S$ and much better in retention of saturation magnetization $\sigma_S$ than those in Comparative Examples 1 to 4 which were treated with a fatty acid. It is considered that these good properties are due to the formation of a coating film on the surface of ferromagnetic metal particles by the chemical reaction between the ferromagnetic metal particles and the cis-1,2-cyclohexanedicarboxylic acid and the coating film contributes to the improvement of oxidation resistance and corrosion resistance of the ferromagnetic metal particles.

In the next step, the surface treatment of ferromagnetic metal particles was carried out under conditions different from those in the above-mentioned Example 1 and Comparative Examples.

Example 2

In this example the surface treatment of ferromagnetic metal particles was carried out with cis-1,2-cyclohexanedicarboxylic acid. The commercial ferromagnetic metal particles used in this example have the physical properties (before their surface treatment) as shown in Table 2 below.

Table 2

| Physical properties | Values |
|---|---|
| Specific surface area | 55 $m^2/g$ |
| Saturation magnetization $\sigma_s$ | 124 emu/g |
| Coercive force $H_c$ | 1540 Oe |
| Length of major axis | 0.3 $\mu m$ |
| Needle ratio | 10 |

First, 300 g (3 wt% based on the amount of magnetic powder) of cis-1,2-cyclohexanedicarboxylic acid was dissolved in 8 kg of ethanol, and to the ethanol solution was added 40 kg of toluene. The resulting solution was used as the treating solution. In this treating solution was placed 10 kg of the ferromagnetic metal particles, and the mixture was stirred for about 24 hours under the air-tight conditions for the prevention of oxidation. The ferromagnetic metal particles were freed of toluene by centrifugation. After crushing and vacuum-drying, there was obtained a treated powder.

Example 3

The same procedure as in Example 1 was repeated to produce a treated powder except that the cis-1,2-cyclohexanedicarboxylic acid was replaced by trans-1,2-cyclohexanedicarboxylic acid.

Example 4

The same procedure as in Example 1 was repeated to produce a treated powder except that the cis-1,2-cyclohexanedicarboxylic acid was replaced by cis-1,4-cyclohexanedicarboxylic acid.

Example 5

The same procedure as in Example 1 was repeated to produce a treated powder except that the cis-1,2-cyclohexanedicarboxylic acid was replaced by cis-1,2-cyclohexanedicarboxylic anhydride (340 g).

Comparative Example 6

The same procedure as in Example 2 was repeated to produce a treated powder except that the cis-1,2-cyclohexanedicarboxylic acid was not added to the treating solution.

The treated powders obtained in Examples 2 to 5 and Comparative Example 6 were tested for change with time in magnetic properties. The results are shown in Table 3. The coercive force $H_c$ and saturation magnetization $\sigma_s$ of the treated powders were measured immediately after their drying. The coercive force $H_c$ and saturation magnetization $\sigma_s$ of the treated powders were also measured after they had been conditioned for 1 week at 60 °C and 90 %RH. In Comparative Example 7, ferromagnetic metal particles without treatment were tested in the same manner as mentioned above. The ratio of deterioration of saturation magnetization $\sigma_s$ in Comparative Example 7 is one which is based on the value of saturation magnetization $\sigma_s$ given in Table 2.

Table 3

| Treating agent | Immediately after drying | | After conditioning for 1 week | | Ratio of deterioration (%) |
|---|---|---|---|---|---|
| | $H_c$ (Oe) | $\sigma_s$ (emu/g) | $H_c$ (Oe) | $\sigma_s$ (emu/g) | |
| Example 2 | 1530 | 120.0 | 1520 | 113.6 | 5.3 |
| Example 3 | 1530 | 120.1 | 1520 | 113.4 | 5.6 |
| Example 4 | 1530 | 120.3 | 1520 | 112.5 | 6.5 |
| Example 5 | 1530 | 119.8 | 1520 | 113.3 | 5.4 |
| Comparative Example 6 | 1530 | 120.0 | 1490 | 103.0 | 14.2 |
| Comparative Example 7 | - | - | 1490 | 104.0 | 16.1 |

It is noted from Table 3 that the treated ferromagnetic metal particles in Examples 2 to 5 change very little with time in coercive force $H_c$ and saturation magnetization $\sigma_s$ and hence they are superior in stability with time. In other words, the surface treatment of ferromagnetic metal particles with an alicyclic dicarboxylic acid or anhydride thereof greatly improves the oxidation resistance of the ferromagnetic metal particles. Moreover, the surface treatment reduces the ratio of deterioration of saturation magnetization $\sigma_s$ to about one-third of that of untreated ones.

The treated powder obtained in Example 2 was made into a magnetic coating paint according to the following formulation, and it was applied to a non-magnetic substrate to prepare a magnetic tape.

| Ingredients | Amount |
|---|---|
| Treated powder (Example 2) | 100 pbw |
| Vinyl chloride-vinyl acetate copolymer | 10 pbw |
| Polyurethane resin | 10 pbw |
| Carbon | 3 pbw |
| $Al_2O_3$ | 2 pbw |
| Methyl ethyl ketone | 100 pbw |
| Toluene | 100 pbw |
| Cyclohexanone | 50 pbw |

The thus obtained magnetic recording medium was stored at 60°C and 90 %RH for 1 week to test the deterioration of magnetic properties (in terms of comparison with the initial values). The results are shown in Table 4. For comparison, a magnetic tape was prepared in the same manner as mentioned above except that the treated powder was replaced by an untreated powder used in Comparative Example 7.

Table 4

| | | Tape with treated powder | Tape with un-treated powder |
|---|---|---|---|
| Residual magnetic flux density $B_r$ (Gauss) | Initial value | 2120 | 2280 |
| | After 1 week | 1980 | 2010 |
| Rectangular ratio $R_s$ | Initial value | 0.86 | 0.87 |
| | After 1 week | 0.86 | 0.85 |
| Coercive force $H_c$ (Oe) | Initial value | 1590 | 1630 |
| | After 1 week | 1580 | 1560 |

It is noted from Table 4 that the magnetic tape based on the surface-treated magnetic powder decreased in residual magnetic flux density, coercive force, and rectangular ratio after storage for 1 week much less than the one based on the untreated magnetic powder. In other words, the magnetic recording medium according to the present invention is highly stable in magnetic properties after long-term storage.

(2) Examples of the second aspect of the invention in which the surface treatment of ferromagnetic metal particles was carried out with naphthalenedicarboxylic acid and/or anhydride thereof.

Example 1

This example demonstrates the surface-treatment with 2,3-naphthalenedicarboxylic acid.

First, 2,3-naphthalenedicarboxylic acid was dissolved in ethanol to give a 1.8 x $10^{-3}$mol/l solution. In 50 ml of this ethanol solution was placed 2.5 g of ferromagnetic metal fine particles (A), followed by standing for about 8 hours. The ferromagnetic metal particles were filtered out and washed with methanol several times to remove the physically adsorbed compound. The treated ferromagnetic metal particles were vacuum-dried at about 30 °C for 8 hours. Thus there was obtained a treated powder.

Example 2

The same procedure as in Example 1 was repeated to produce a treated powder except that the 2,3-naphthalenedicarboxylic acid was replaced by 2,3-naphthalenedicarboxylic anhydride.

Example 3

The same procedure as in Example 1 was repeated to produce a treated powder except that the 2,3-naphthalenedicarboxylic acid was replaced by 1,8-naphthalenedicarboxylic acid.

Example 4

The same procedure as in Example 1 was repeated to produce a treated powder except that the 2,3-naphthalenedicarboxylic acid was replaced by 1,8-naphthalenedicarboxylic anhydride.

Comparative Example 1

The same procedure as in Example 1 was repeated to produce a treated powder except that the 2,3-naphthalenedicarboxylic acid was replaced by phthalic acid.

The treated powders obtained in Examples 1 to 4 and Comparative Example 1 were tested for change with time in magnetic properties by measuring coercive force $H_c$ and saturation magnetization $\sigma_s$ after vacuum drying. They were also tested for retention of saturation magnetization $\sigma_s$ by measuring coercive force $H_c$ and saturation magnetization $\sigma_s$ after standing at 60 °C and 60 %RH in a constant-temperature constant-humidity bath for 2 weeks. The results are shown in Table 1.

Table 1

| Treating agent | Immediately after drying | | After conditioning for 2 weeks | | Retention of $\sigma_s$ |
|---|---|---|---|---|---|
| | $H_c$ (Oe) | $\sigma_s$ (emu/g) | $H_c$ (Oe) | $\sigma_s$ (emu/g) | |
| 2,3-naphthalene dicarboxylic acid | 1470 | 120.61 | 1462 | 118.21 | 98.01 |
| 2,3-naphthalene dicarboxylic anhydride | 1471 | 119.81 | 1464 | 117.89 | 98.40 |
| 1,8-naphthalene dicarboxylic acid | 1470 | 121.11 | 1462 | 116.76 | 96.41 |
| 1,8-naphthalene dicarboxylic anhydride | 1472 | 120.72 | 1463 | 116.56 | 96.55 |
| Phthalic acid | 1472 | 122.98 | 1464 | 118.37 | 96.25 |
| Not treated | 1473 | 125.44 | 1432 | 112.53 | 89.71 |

Although 2,3-naphthalenedicarboxylic acid and phthalic acid have almost the same acidity, the former is superior to the latter in surface treatment intended for the higher retention of saturation magnetization $\sigma_s$ and the prevention of deterioration with time by oxidation. This indicates that the performance (such as oxidation resistance and corrosion resistance) of the treating agent depends not only on its acidity but also on water repellency produced by the aromatic ring.

It is noted that better results were obtained in Example 2 than in Example 1, or better results were obtained in Example 4 than in Example 3. This indicates that the anhydride has an adequate acidity suitable for treatment. Therefore, it is a good treating agent to improve the oxidation resistance of ferromagnetic metal particles.

Example 5

The same procedure as in Example 1 was repeated except that the ferromagnetic metal particles (A) were replaced by ferromagnetic metal particles (B) having a different shape.

Comparative Example 2

The same procedure as in Example 5 was repeated except that the 2,3-naphthalenedicarboxylic acid was replaced by phthalic acid.

The powder samples obtained in Example 5 and Comparative Example 2 were tested, after vacuum drying, for change with time in magnetic properties by measuring coercive force $H_c$ and saturation magnetization $\sigma_s$ after conditioning in a constant-temperature constant-humidity bath at 60 °C and 90 %RH for 2 weeks. The retention of saturation magnetization $\sigma_s$ was obtained. The results are shown in Table 2.

Table 2

| Treating agent | Immediately after drying | | After conditioning for 2 weeks | | Retention of $\sigma_s$ |
|---|---|---|---|---|---|
| | $H_c$ (Oe) | $\sigma_s$ (emu/g) | $H_c$ (Oe) | $\sigma_s$ (emu/g) | |
| 2,3-naphthalene dicarboxylic acid | 1465 | 119.20 | 1455 | 110.86 | 93.00 |
| Phthalic acid | 1468 | 120.68 | 1459 | 106.75 | 88.46 |
| Not treated | 1475 | 124.07 | 1437 | 97.11 | 78.27 |

It is noted from Table 2 that the magnetic powder in Comparative Example 2 greatly decreased with time in coercive force $H_c$ and saturation magnetization $\sigma_s$, whereas the magnetic powder in Example 5 exhibited a very good storage stability. Therefore, 2,3-naphthalenedicarboxylic acid as the treating agent is effective in the improvement of oxidation resistance and corrosion resistance.

The treated powders obtained according to the second aspect of the present invention were processed into magnetic tapes in the following examples.

Example 1

The magnetic powder (needlelike) used in this example has the following properties. Specific surface area: 53.9 $m^2/g$, coercive force: 1590 Oe, saturation magnetization: 120 emu/g, average length of major axis: 0.3 $\mu m$, and needle ratio: 8-10.

First, 2,3-naphthalenedicarboxylic acid was dissolved in ethanol to prepare a 2.0 x $10^{-3}$ mol/l solution. Into 10 parts by weight of this ethanol solution was dispersed 5 parts by weight of the above-mentioned magnetic metal powder. Dispersion was effected by irradiation with ultrasonic wave for about 30 minutes. After standing for about 2 hours, the magnetic metal particles were filtered out and washed with ethanol several times and finally vacuum-dried. Thus there was obtained treated magnetic fine particles.

The treated magnetic fine particles were made into a magnetic coating paint according to the following formulation, and the coating paint was applied to a 9-$\mu m$ thick polyester base film to prepare a magnetic tape.

| Ingredients | Amount |
|---|---|
| Treated magnetic particles | 100 pbw |
| Vinyl chloride-vinyl acetate copolymer | 10 pbw |
| Polyurethane resin | 10 pbw |
| Carbon | 3 pbw |
| $Al_2O_3$ | 2 pbw |
| Methyl ethyl ketone | 100 pbw |
| Toluene | 100 pbw |
| Cyclohexanone | 50 pbw |

The thus obtained magnetic tape was stored at 60° C and 60 %RH for 1 week to test the deterioration of magnetic properties (in terms of comparison with the initial values). The results are shown in Table 1. For comparison, a magnetic tape was prepared in the same manner as mentioned above except that the treated magnetic particles were replaced by untreated ones.

Table 1

| | | Tape with treated powder | Tape with un-treated powder |
|---|---|---|---|
| Residual magnetic flux density $B_r$ (Gauss) | Initial value | 2220 | 2260 |
| | After 1 week | 2070 | 1990 |
| Rectangular ratio $R_s$ | Initial value | 0.87 | 0.87 |
| | After 1 week | 0.86 | 0.85 |
| Coercive force $H_c$ (Oe) | Initial value | 1590 | 1630 |
| | After 1 week | 1580 | 1560 |

Example 2

The magnetic fine particles obtained in Example 1 were made into a magnetic paint according to the following formulation, and a magnetic tape was prepared in the same manner as in Example 1.

| Ingredients | Amount |
|---|---|
| Magnetic fine particles | 100 pbw |
| 2,3-naphthalenedicarboxylic acid | 3 pbw |
| Vinyl chloride-vinyl acetate copolymer | 10 pbw |
| Polyurethane resin | 10 pbw |
| Carbon | 3 pbw |
| $Al_2O_3$ | 2 pbw |
| Methyl ethyl ketone | 100 pbw |
| Toluene | 100 pbw |
| Cyclohexanone | 50 pbw |

The thus obtained magnetic tape was tested for deterioration with time in the same manner as in Example 1. The results are shown in Table 2.

Table 2

| | | Tape with treated powder | Tape with untreated powder |
|---|---|---|---|
| Residual magnetic flux density $B_r$ (Gauss) | Initial value | 2240 | 2260 |
| | After 1 week | 2060 | 1900 |
| Rectangular ratio $R_s$ | Initial value | 0.88 | 0.87 |
| | After 1 week | 0.87 | 0.85 |
| Coercive force $H_c$ (Oe) | Initial value | 1600 | 1630 |
| | After 1 week | 1590 | 1560 |

Example 3

The magnetic powder (needlelike) used in this example has the following properties. Specific surface area: 53.9 $m^2/g$, coercive force: 1590 Oe, saturation magnetisation $\sigma_S$:120 emu/g, average length of major axis: 0.3 µm, and needle ratio: 8-10.

First, 1,8-naphthalenedicarboxylic acid was dissolved in ethanol to prepare a 2.0 x $10^{-3}$ mol/l solution. Into 100 parts by weight of this ethanol solution was dispersed 5 parts by weight of the above-mentioned magnetic metal powder. Dispersion was effected by irradiation with ultrasonic wave for about 30 minutes. After standing for about 2 hours, the magnetic metal particles were filtered out and washed with ethanol several times and finally vacuum-dried. Thus there were obtained treated magnetic fine particles.

The treated magnetic fine particles were made into a magnetic coating paint according to the following formulation, and the coating paint was applied to a 9-µm thick polyester base film to prepare a magnetic tape.

| Ingredients | Amount |
|---|---|
| Treated magnetic particles | 100 pbw |
| Vinyl chloride-vinyl acetate copolymer | 10 pbw |
| Polyurethane resin | 10 pbw |
| Carbon | 3 pbw |
| $Al_2O_3$ | 2 pbw |
| Methyl ethyl ketone | 100 pbw |
| Toluene | 100 pbw |
| Cyclohexanone | 50 pbw |

The thus obtained magnetic tape was tested for deterioration with time in the same manner as in Example 1. The results are shown in Table 3.

Table 3

| | | Tape with treated powder | Tape with un-treated powder |
|---|---|---|---|
| Residual magnetic flux density $B_r$ (Gauss) | Initial value | 2250 | 2260 |
| | After 1 week | 2120 | 1990 |
| Rectangular ratio $R_s$ | Initial value | 0.87 | 0.87 |
| | After 1 week | 0.87 | 0.85 |
| Coercive force $H_c$ (Oe) | Initial value | 1590 | 1630 |
| | After 1 week | 1580 | 1560 |

Example 4

The magnetic fine particles obtained in Example 3 were made into a magnetic paint according to the following formulation, and a magnetic tape was prepared in the same manner as in Example 1.

| Ingredients | Amount |
|---|---|
| Magnetic fine particles | 100 pbw |
| 1,8-naphthalenedicarboxylic acid | 3 pbw |
| Vinyl chloride-vinyl acetate copolymer | 10 pbw |
| Polyurethane resin | 10 pbw |
| Carbon | 3 pbw |
| $Al_2O_3$ | 2 pbw |
| Methyl ethyl ketone | 100 pbw |
| Toluene | 100 pbw |
| Cyclohexanone | 50 pbw |

The thus obtained magnetic tape was tested for deterioration with time in the same manner as in Example 1. The results are shown in Table 4.

Table 4

| | | Tape with treated powder | Tape with untreated powder |
|---|---|---|---|
| Residual magnetic flux density $B_r$ (Gauss) | Initial value | 2230 | 2260 |
| | After 1 week | 2070 | 1990 |
| Rectangular ratio $R_s$ | Initial value | 0.87 | 0.87 |
| | After 1 week | 0.86 | 0.85 |
| Coercive force $H_c$ (Oe) | Initial value | 1600 | 1630 |
| | After 1 week | 1580 | 1560 |

Effect of the invention

As mentioned above, the present invention provides ferromagnetic metal particles which are superior in oxidation resistance owing to their surface-treatment with an alicyclic dicarboxylic acid and/or anhydride thereof or naphthalenedicarboxylic acid and/or anhydride thereof. Because of their good oxidation resistance, the surface-treated ferromagnetic metal particles can be made into a magnetic paint for the magnetic recording media which are superior in quality, magnetic properties, and storage stability.

**Claims**

1. Ferromagnetic metal particles for magnetic recording media characterized in that said particles are made of a ferromagnetic metal material or a ferromagnetic alloy material and are surface-treated with an alicyclic dicarboxylic acid and/or anhydride thereof.

2. A magnetic recording medium in which a magnetic layer composed mainly of a magnetic powder and a binder is formed on a nonmagnetic substrate, characterized in that the magnetic powder is the ferromagnetic metal particles defined in Claim 1.

3. Ferromagnetic metal particles for magnetic recording media characterized in that said particles are made of a ferromagnetic metal material or a ferromagnetic alloy material and are surface-treated with naphthalenedicarboxylic acid and/or anhydride thereof.

4. A magnetic recording medium in which a magnetic layer composed mainly of a magnetic powder and a binder is formed on a nonmagnetic substrate, characterized in that the magnetic powder is the ferromagnetic metal particles defined in Claim 3

5. Ferromagnetic metal particles for magnetic recording media as defined in Claim 3, wherein the naphthalenedicarboxylic acid is 2,3-naphthalenedicarboxylic acid.

6. Ferromagnetic metal particles for magnetic recording media as defined in Claim 3, wherein the naphthalenedicarboxylic acid is 1,8-naphthalenedicarboxylic acid.

European Patent Office

# EUROPEAN SEARCH REPORT

Application Number

**EP 91 11 3873**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 623 405 (K. TAMAI)<br>* claims 1-7 * * | 1,2 | G 11 B 5/712<br>H 01 F 1/06<br>G 11 B 5/706 |
| A | EP-A-0 099 259 (KONISHIROKU PHOTO IND. CO. LTD.)<br>* page 9, line 3; claims 1,4 * * * page 10, line 5-16 * * | 1,2 | |

| TECHNICAL FIELDS SEARCHED (Int. Cl.5) |
|---|
| G 11 B<br>H 01 F |

The present search report has been drawn up for all claims

| Place of search | Date of completion of search | Examiner |
|---|---|---|
| The Hague | 06 December 91 | VITZTHUM N.A. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document